(19) Europäisches Patentamt
European Patent Office
Office européen des brevets

(11) **EP 3 716 196 A1**

(12) **EUROPÄISCHE PATENTANMELDUNG**

(43) Veröffentlichungstag:
**30.09.2020** Patentblatt 2020/40

(51) Int Cl.:
***G06Q 40/08*** (2012.01)     ***G06Q 10/10*** (2012.01)
***G06Q 10/06*** (2012.01)

(21) Anmeldenummer: **19166300.4**

(22) Anmeldetag: **29.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Huk-Coburg**
**Haftpflicht-Unterstützungs-Kasse**
**Kraftfahrender Beamter Deutschlands A. G. in Coburg**
**96450 Coburg (DE)**

(72) Erfinder:
• **Gleixner, Andreas**
**96450 Coburg (DE)**
• **Bechmann, Simon**
**96215 Lichtenfels (DE)**

• **Körzdörfer, Thomas**
**96215 Lichtenfels (DE)**
• **John, Daniel**
**96450 Coburg (DE)**
• **Schroeder, Tobias**
**96450 Coburg (DE)**
• **Liebscher, André**
**09623 Frauenstein (DE)**
• **Raphael, Sabine**
**96450 Coburg (DE)**
• **Spies, Andreas**
**96450 Coburg (DE)**
• **Trautmann, Jonas**
**40591 Düsseldorf (DE)**

(74) Vertreter: **Bach, Alexander**
**Mitscherlich PartmbB**
**Patent- und Rechtsanwälte**
**Sonnenstraße 33**
**80331 München (DE)**

(54) **VERFAHREN UND SYSTEM ZUR KENNZEICHNUNG EINES FAHRVERHALTENS**

(57) Computer-implementiertes Verfahren zur Kennzeichnung eines Fahrverhaltens, umfassend die Schritte:
- Erhalten von Fahrdaten einer Fahrt, wobei die Fahrdaten zumindest einem Fahrzeug zugeordnet sind;
- Verdichten der Fahrdaten zu einer oder mehreren Kennzahlen einer Fahrt;
- Speichern der verdichteten Fahrdaten,
- Bestimmung zumindest eines Indikators für das Fahrverhalten eines Fahrers, basierend auf gespeicherten verdichteten Fahrdaten mehrerer Fahrten eines bestimmten Zeitraums;
- Ausgeben des zumindest einen Indikators.
In einer vorteilhaften Ausführungsform erfolgt die Bestimmung des Indikators aufgrund einer maschinell gelernten Zuordnung.

Figur 1

EP 3 716 196 A1

**Beschreibung**

Die folgende Erfindung betrifft computer-implementierte Verfahren und Systeme zur Kennzeichnung des Fahrverhaltens von Nutzern eines Kraftfahrzeugs. Die Erfindung betrifft insbesondere solche Verfahren und Systeme, bei welchen Indikatoren, die ein Fahrverhalten kennzeichnen, auf der Basis eines oder mehrerer maschinell gelernter Parameter bestimmt werden.

Im Stand der Technik sind Verfahren und Systeme zur Kennzeichnung eines Fahrverhaltens bekannt. Die EP 3 162 651 A1 beschreibt diesbezüglich ein Fahrerprofilerstellungssystem und -verfahren, wobei in Daten Ereignisse identifiziert werden, welche eine Bewegung eines Fahrzeugs anzeigen, wobei besagten Ereignissen ein Profilindex zugeordnet wird, der sich auf zumindest einen Straßenabschnitt bezieht, durch welchen sich das Fahrzeug bewegt hat, als das betreffende Ereignis auftrat, wobei die Ereignisse in Gruppen sortiert werden, wobei jede Gruppe einem unterschiedlichen Profilindex entspricht, und wobei aus den Ereignissen ein Fahrerprofil bestimmt wird, welches zur Kennzeichnung des Fahrverhaltens des Fahrers dient. Das offenbarte System und Verfahren benötigt jedoch externe Quellen, insbesondere Experten, um relevante Zusammenhänge zwischen den erhobenen Daten und den Fahrerprofilen in heuristischer Weise festzulegen. Die Aussagekraft der gelieferten Daten und Informationen ist damit nur schwer zu verifizieren.

Aufgabe der Erfindung ist, automatisierte Verfahren und Systeme zur Kennzeichnung des Fahrverhaltens von Kraftfahrzeug-Nutzern bereit zu stellen, die eine Aufzeichnung und Auswertung von Fahrdaten einer sehr hohen Anzahl von Nutzern in angemessener Zeit ermöglichen. Aufgabe der Erfindung ist ferner, das Fahrverhalten von Nutzern möglichst genau und prägnant zu kennzeichnen. Die automatisierten Verfahren und Systeme sollen außerdem transparent und nachvollziehbar sein, um eine objektive Verifikation der angezeigten Zusammenhänge zu ermöglichen. Schließlich ist auch Aufgabe der Erfindung, insbesondere einzelne Aspekte eines Fahrverhaltens, einschließlich einzelner Fahrerereignisse, zu identifizieren und im Hinblick auf ein damit verbundenes Unfallrisiko zu kennzeichnen.

Diese Aufgaben werden gelöst durch die Verfahren und das System nach den unabhängigen Patentansprüchen. Bevorzugte Ausführungsformen werden durch die abhängigen Patentansprüche angegeben.

In einem ersten Aspekt stellt die Erfindung ein computer-implementiertes Verfahren zur Kennzeichnung eines Fahrverhaltens, umfassend die Schritte: Erhalten von Fahrdaten einer Fahrt, wobei die Fahrdaten zumindest einem Fahrzeug zugeordnet sind; Verdichten, d.h. Reduzieren bzw. Zusammenfassen der Fahrdaten zu einer oder mehreren Kennzahlen einer Fahrt; Speichern der verdichteten Fahrdaten; Bestimmung zumindest eines Indikators für das Fahrverhalten eines Fahrers, basierend auf gespeicherten verdichteten Fahrdaten einer oder mehrerer Fahrten eines bestimmten Zeitraums; und Ausgeben des zumindest einen Indikators.

Die Fahrdaten umfassen Messwerte eines oder mehrerer Sensoren, die während einer Fahrt eines Fahrzeugs, beispielsweise eines PKW, aufgezeichnet werden, insbesondere Beschleunigungswerte, und können als Datenstrom erhalten werden. Die Fahrdaten in dem Datenstrom können dabei ferner in Fahrdaten mehrerer Teilfahrten derart aufgespalten sein, dass die Anzahl der Fahrdaten einer Teilfahrt kleiner oder gleich einem vorbestimmten Maximalwert ist.

Um eine korrekte Kennzeichnung zu gewährleisten, können die Fahrdaten zunächst nach Qualitätskriterien gefiltert werden. Dabei kann ein Qualitätskriterium eine korrekte Befestigung eines Fahrdatensensors in einem Fahrzeug betreffen. Ein weiteres Qualitätskriterium kann eine Übereinstimmung von Zeitreihen betreffen, beispielsweise Zeitreihen von Position, Geschwindigkeit und / oder Beschleunigung. Wenn die Fahrdaten ein Qualitätskriterium nicht erfüllen, können diese Fahrdaten aus der weiteren Berechnung ausgeblendet werden.

In einem zusätzlichen Schritt können die erhaltenen Fahrdaten zur weiteren Verbesserung der Indikatoren zusätzlich mit Metadaten, beispielsweise mit Wetter oder Kartendaten angereichert werden. Auch die so angereicherten Fahrdaten werden in der Folge als Fahrdaten bezeichnet.

Die bestimmten Kennzahlen können eine oder mehrere der folgenden Kennzahlen umfassen: Gesamtzeit, für die gültige Geschwindigkeitswerte vorhanden waren; Gesamtzeit, für die gleichzeitig gültige Geschwindigkeitswerte und gültige Beschleunigungswerte vorhanden waren; Gesamtzeit, die sich das Fahrzeug in einer bestimmten Geschwindigkeits-Exzessklasse befunden hat; Gesamtzeit, die sich das Fahrzeug in einer bestimmten Negativ-, Positiv- oder Seitenbzw. Lateral-Beschleunigungs-Exzessklasse befunden hat; Gesamtzeit, die sich das Fahrzeug während einer bestimmten Dauer, beispielsweise an einem Wochentag, in einem Monat oder einem durch andere Zeitangaben definierbaren Zeitraum in einer bestimmten Geschwindigkeits-Exzessklasse befunden hat; Dauer der Fahrt; während der Fahrt zurückgelegte Strecke. Ferner können die eine oder mehreren Kennzahlen auch eine Summe über die Dauer von Smartphone-Nutzungsereignissen umfassen.

Das Bestimmen zumindest eines Indikators für das Fahrverhalten eines Fahrers kann außerdem die Schritte umfassen: Bestimmen eines oder mehrerer Fahrverhaltens-Merkmale, basierend auf gespeicherten verdichteten Fahrdaten eines bestimmten Zeitraums; und Anwenden einer Fahrverhaltensmetrik, basierend auf dem einen oder den mehreren Fahrverhaltens-Merkmalen. Die Merkmale können die Ausgabe eines neuronalen Netzes oder einer anderen maschinell gelernten Zuordnung umfassen, welche gespeicherte verdichtete Fahrdaten als Eingabe verwendet.

Die Fahrverhaltensmetriken können eine oder mehrere der folgenden Metriken oder Aggregationen von einer oder mehreren der folgenden Metriken umfassen: aktueller Gesamtfahrwert (AGF); Zeitreihe des Gesamtfahrwerts (RFG); gesamt gefahrene Zeit (AZ); gesamt gefahrene Zeit Tag (ATZ); Zeitreihe des Detailfahrwerts Geschwindigkeit (RDGF); Zeitreihe des Detailfahrwerts Vorwärtsbeschleunigung (RDvF); Zeitreihe des Detailfahrwerts Rückwärtsbeschleunigung (RDRF); Zeitreihe des Detailfahrwerts Seitenbeschleunigung (RDSF); Zeitreihe des Detailfahrwerts Tageszeit (RDTF); Zeitreihe des Detailfahrwerts Smartphonenutzung (RDHF); Zeitreihe des Detailfahrwerts Geschwindigkeit + Tageszeit (RDGTF); Zeitreihe der zurückgelegten Distanz (RD); Zeitreihe der gefahrenen Zeit (RZ); Fahrt Gesamtfahrwert (TGF); Fahrt zurückgelegte Distanz (TD); Fahrt gefahrene Zeit (TZ).

Zusätzlich können die bestimmten Indikatoren entweder auf Fahrzeug- oder auf Fahrerbasis aggregiert werden. Ferner kann der zumindest eine Indikator für eine eindeutige Kombination eines Fahrers und eines Fahrzeugs bestimmt werden.

Ein Indikator kann einem Unfallrisiko entsprechen, d.h. mit einer Unfallhäufigkeit positiv oder negativ korreliert sein. Bei der Bestimmung des Indikators kann eine maschinell gelernte Zuordnung verwendet werden. Die Zuordnung kann auf der Basis empirischer Unfall- bzw. Schadendaten maschinell gelernt werden.

Gemäß einem zweiten Aspekt umfasst die Erfindung ferner ein Verfahren zur Identifizierung von Fahrereignissen und Fahrmanövern, die bei einem Fahrverhalten mit besonders hohem Unfallrisiko auftreten, umfassend die Schritte: Identifizieren zumindest eines Ereignisses oder Fahrmanövers, basierend auf den erhaltenen Fahrdaten; Zuordnen von Ortsinformationen zu dem Ereignis oder Fahrmanöver, zum Beispiel von einer oder mehreren GPS-Koordinaten; und Ausgeben der Ortsinformationen und des Ereignisses an einen Nutzer, beispielsweise zur Anzeige in einer elektronischen Straßenkarte. Das Ereignis oder Fahrmanöver kann mittels eines maschinell gelernten Klassifikators identifiziert werden.

Gemäß einem dritten Aspekt stellt die Erfindung ferner ein Verfahren zum maschinellen Lernen eines Streckenabschnitt-Profils für einen bestimmten Streckenabschnitt und eine bestimmte Fahrtrichtung, basierend auf den erhaltenen Fahrdaten bereit. Das Streckenabschnittprofil kann dabei mindestens eine der folgenden Eigenschaften umfassen: Geschwindigkeitsprofil, Beschleunigungsprofil, Rückwärtsbeschleunigungsprofil, Seitenbeschleunigungsprofil, Topologie, Unfallrisiko, Straßenzustand, Verkehrsfluß.

Gemäß einem vierten Aspekt der Erfindung kann zumindest ein Fahrverhaltens-Indikator basierend auf einem maschinell gelernten Streckenprofil bestimmt werden.

Schließlich können einzelne oder mehrere erhaltene Fahrdaten in einem weiteren Schritt, beispielsweise aus Datenschutzgründen, gelöscht werden.

Gemäß einem fünften Aspekt stellt die Erfindung außerdem einen Server zur Kennzeichnung eines Fahrverhaltens bereit, umfassend: eine Schnittstelle zum Erhalten von Fahrdaten einer Fahrt, wobei die Fahrdaten zumindest einem Fahrzeug zugeordnet sind; eine Einheit zum Verdichten der Fahrdaten zu einer oder mehreren Kennzahlen einer Fahrt; einen Speicher zum Speichern der verdichteten Fahrdaten; eine Einheit zur Bestimmung zumindest eines Indikators des Fahrverhaltens eines Fahrers, basierend auf gespeicherten verdichteten Fahrdaten mehrerer Fahrten eines bestimmten Zeitraums; eine Schnittstelle zum Ausgeben der zumindest einen Fahrverhaltensmetrik; wobei der Server eingerichtet ist, eines oder mehrere der oben beschriebenen Verfahren durchzuführen.

Gemäß einem sechsten Aspekt stellt die Erfindung schließlich ein Fahrer-Informations- und insbesondere Assistenzsystem bereit, welches einem Fahrer einen nach den oben beschriebenen Verfahren erhaltenen Indikator anzeigt. Die Anzeige kann während der Fahrt erfolgen. Um eine Ablenkung des Fahrers während der Fahrt zu vermeiden, kann die Anzeige auch bis zum Abschluss der Fahrt oder wenn das Fahrzeug steht, angezeigt werden. Durch die erfindungsgemäße Kombination von Fahrdaten mit historischen Unfalldaten, kann ein direkter Zusammenhang von Fahrverhalten und Unfallrisiko hergestellt werden. Ferner ermöglicht die erfindungsgemäße schnelle Anreicherung und Verarbeitung der Daten in einem sog. Stream, ein zeitnahes Feedback unmittelbar nach Beendigung der Fahrt. Damit erlaubt die erfindungsgemäße-Lösung die Auswertung von KFZ-Fahrdaten in Bezug auf risikoreiches Fahrverhalten in Echtzeit und gibt dem Fahrer unmittelbar nach Beendigung der Fahrt ein direktes Feedback, welches ihn dabei unterstützt, sein Unfallrisiko zu senken und riskante Fahrmanöver oder riskante Streckenprofile in Zukunft zu vermeiden.

Fig. 1    zeigt ein System **100** zur Kennzeichnung eines Fahrverhaltens gemäß einer Ausführungsform der Erfindung.

Fig. 2    zeigt ein computer-implementiertes Verfahren **200** gemäß einer Ausführungsform der Erfindung.

Fig. 3    zeigt Details der Schritte **240** und **250** in Figur 2.

Fig. 4    zeigt Zusammenhänge verschiedener Merkmale gemäß einer Ausführungsform der Erfindung mit einer empirischen Unfallhäufigkeit.

Fig. 5    zeigt den Zusammenhang eines gemäß einer Ausführungsform der Erfindung bestimmten Fahrwerts mit einer Unfallhäufigkeit.

Fig. 6     zeigt relative Häufigkeiten von gefahrenen Geschwindigkeiten auf Strecken mit gleichem Tempolimit aber unterschiedlicher Topologie.

Fig. 7     zeigt beispielhaft eine Identifikation und Klassifikation komplexerer Fahrmanöver, hier eines Anfahrvorgangs, im Hinblick auf einen Zusammenhang mit empirischen Unfallhäufigkeiten sowie im Hinblick auf einen Zusammenhang mit der Identifikation von Fahrern anhand von charakteristischen Fahrmanövern gemäß einer weiteren Ausführungsform der Erfindung.

Fig. 8     zeigt verschiedene Bildschirmmasken der App **125** aus Figur 1 gemäß einer Ausführungsform der Erfindung.

Fig. 9     zeigt ein System zur Kennzeichnung von Fahrverhalten gemäß einer Ausführungsform der Erfindung.

DETAILLIERTE BESCHREIBUNG

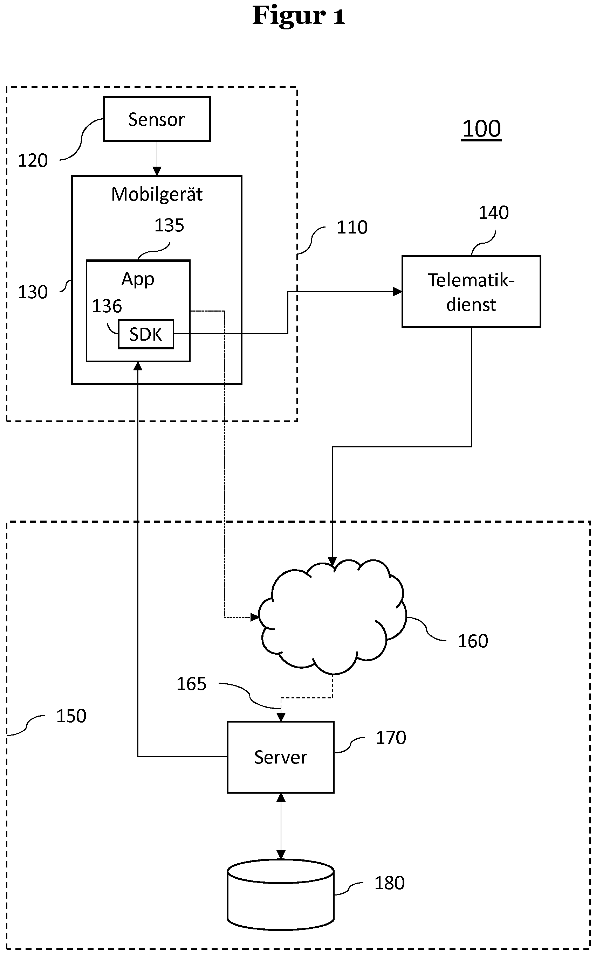

Figur 1 zeigt ein System **100** zur Kennzeichnung eines Fahrverhaltens gemäß einer Ausführungsform der Erfindung. In einem Kraftfahrzeug **110** ist ein Sensor **120** angebracht, beispielsweise in Form einer an die Windschutzscheibe angehefteten Plakette, die dem Fahrzeug **110** eindeutig zugeordnet ist und kontinuierlich Fahrdaten des Fahrzeugs **110** erfasst, insbesondere Beschleunigungsdaten. Der Sensor **120** ist, beispielsweise über eine Bluetooth-Verbindung mit einem Mobilgerät **130** gekoppelt, beispielsweise einem Smartphone oder einem Tablet-Computer. Auf dem Mobilgerät **130** ist ein Applikationsprogramm ("App") **135** installiert, welche die im Backend-System **150** hinterlegten Auswertungen (Fahrdaten, Ereignisse, Indikator) zum Fahrverhalten abrufen und innerhalb weniger Minuten nach Beendigung der Fahrt in der App anzeigen kann. Die App liest außerdem über ein spezielles Interface ("SDK") 136 die von dem Sensor **120** aufgezeichneten Fahrdaten aus und speichert diese, wie auch weitere Daten, welche über weitere Sensoren des Mobilgeräts, wie beispielsweise Positionsdaten (GPS-Koordinaten), Beschleunigungsdaten, Geschwindigkeitsdaten, Smartphone-Nutzung, Gyroskopdaten und Barometerdaten erhalten werden. Die App ist ferner über das spezielle Interface ("SDK") **136** mit einem Telematikdienst **140** gekoppelt, beispielsweise über eine Mobilfunkverbindung. Der Telematikdienst **140** erhält die von dem Sensor **120** und dem Mobilgerät **130** gemessenen oder aufgezeichneten Fahrdaten. Der Telematikdienst **140** bereitet die Fahrdaten zur weiteren Verarbeitung auf, etwa durch Synchronisation von Zeitreihen des Sensors und des Mobilgeräts **130,** sowie durch Hinzufügen weiterer Daten, wie der räumlichen Orientierung der Sensordaten, Kartendaten mit Informationen zu Straßenabschnitten, etc. Dann werden die so vorbereiteten Daten per Stream an das Backend-System **150** gesendet. Das Backend-System **150** umfasst einen Cloud-Server **160,** welcher die von dem Telematikdienst übermittelten Daten zunächst erhält. Alternativ kann der Cloud-Server **160** auch direkt mit der App **135** kommunizieren.
In dem Cloud-Server **160** wird ein kontinuierlicher Strom (Stream) **165** von Daten vorbereitet. Insbesondere werden lange Fahrten mit einer sehr großen Menge an Fahrdaten derart aufgespalten, dass eine vorbestimmte maximale Größe für Datenpakete im Stream eingehalten werden kann und so eine effiziente Verarbeitung der Daten im Stream ermöglicht wird (sog. Fahrten- bzw. Fahrten Splitting). Da einzelne Fahrten (Trips) separat bezüglich ihres Unfallrisikos bewertet werden, wird diese Logik des Trip-Splittings später in dem erfindungsgemäßen Verfahren entsprechend berücksichtigt. Das Zusammenspiel aus Indikatorenbestimmung/Fahrten-Splitting erlaubt insbesondere die zeitnahe Bewertung von Fahrten und damit auch das direkte Feedback an den Fahrer. Darüber hinaus ermöglicht der Cloud Server **160** die Zwischenspeicherung der Daten in Zeiten hoher Auslastung (z. B. Rush Hour), um so einen kontinuierlichen Datenstrom an den Server **170** sicherzustellen.
Die so vorbereiteten und zwischengespeicherten Daten stellt der Cloud-Server **160** dann über einen Stream **165** an einem Server **170** bereit, der mit einem Datenbanksystem **180** gekoppelt ist, wo die erhaltenen Fahrdaten in geeigneter Weise aggregiert und ausgewertet werden, so dass eine Einschätzung des Unfallrisikos sowie die Identifikation von risikoreichen Fahrmanövern im Stream möglich ist.
Die Kombination von Smartphone und Sensor ermöglicht es insbesondere zwischen verschiedenen Fahrern (Smartphone) eines Fahrzeugs (Sensor) zu differenzieren. So können Nutzer in der App weitere Fahrer des Fahrzeuges einladen, wodurch eine individuelle Bewertung des Fahrverhaltens sowie individuelles Feedback für verschiedene Fahrer ermöglicht wird. Das als Hauptfahrer gekennzeichnete Smartphone erhält einen priorisierten (d. h. zeitlich früheren) Pair-Link vom Sensor, so dass sichergestellt ist, dass bei Anwesenheit mehrerer eingetragener Fahrer der Hauptfahrer als Fahrer identifiziert wird. Weiterhin erlaubt das System die Identifikation des Fahrers auf Basis der erhaltenen Fahrdaten, beispielsweise durch Erkennung von charakteristischen Fahrmanövern, wie etwa Anfahrvorgängen, mit Hilfe eines maschinell trainierten neuronalen Netzwerks.
Während das System grundsätzlich auf der Kombination von Beschleunigungsdaten des Sensors mit Smartphone-Daten beruht, kann das System auch Fahrten bewerten, die nur auf Sensor-Daten beruhen. Dieser Fall tritt insbesondere immer dann auf, wenn ein Fahrer ohne Smartphone/App oder mit abgeschalteter Bluetooth-Verbindung fährt. Die Fahrt wird dann vom Sensor aufgezeichnet, gespeichert, und bei der nächsten Verbindung mit dem Smartphone übertragen. Diese Lösung ist in insbesondere als Stand-Alone Lösung für besonders datenschutz-bewusste Fahrer interessant. Die Fahrtbewertung erfolgt dann lediglich mit den Beschleunigungsdaten des Sensors (evtl. auch unter Verwendung der GPS-Geschwindigkeit aus dem SDK); in diesem Fall werden keine GPS Koordinaten benötigt.

Angesichts der anfallenden sehr großen Datenmengen und der Notwendigkeit des zeitnahen Feedbacks an den Fahrer stellt die Verarbeitung der Fahrdaten in Echtzeit eine große technische Herausforderung dar. Im Folgenden wird daher darauf eingegangen, wie die schnelle Verarbeitung der Daten unter Berücksichtigung der direkten Korrelation mit historischen Unfalldaten möglich wird.

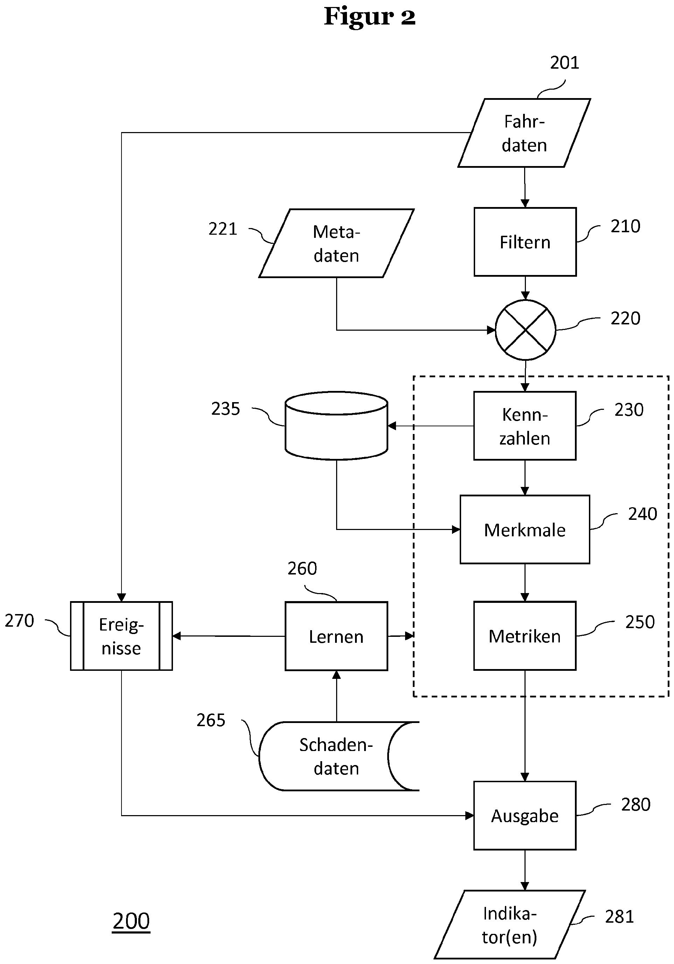

Figur 2 zeigt hierzu ein computer-implementiertes Verfahren **200** gemäß einer Ausführungsform der Erfindung. In Schritt **201** werden Fahrdaten erhalten, welche in dem Cloud-Server 160 zuvor wie folgt aufgespalten worden sind, um eine Verarbeitung von Datenpaketen von etwa ähnlicher Größe und insbesondere einer maximalen Größe zu ermöglichen. Die Aufspaltung erfolgt dabei für Sensorfahrdaten und Fahrdaten des Mobilgeräts auf unterschiedliche Weise: Seien TM die Metadaten einer Fahrt T und TL(X) = [EX1, EX2, ..., EXN(X)] die zeitlich geordnete Liste (mit Länge N(X)) der Kategorie X (position, accel_phone, accel_tag, gyro...) der Daten des Mobilgeräts. Weiterhin sei $EX_{i,time}$ der zum jeweiligen Datenpunkt gehörende Zeitstempel und $Z \in \mathbb{N}$ eine im Hinblick auf eine erwartete Last und eine Verarbeitungsgeschwindigkeit des Systems festgelegte Konstante (Z = 1500).

Wenn nun N > Z, dann wird T aufgespalten in zwei Tripsegmente T1 und T2. Dabei gilt:

$$TL(P)_1 = [EP_1, EP_2, ..., EP_Z]$$

$$TL(P)_2 = [EP_{Z+1}, EP_{Z+2}, ..., EP_{N(P)}]$$

TL(P) ist dabei die Liste der Positionsdatenpunkte. Für alle anderen Listen der Kategorie X (accel_phone, accel_tag, gyro...). gilt:

$$TL(X)_1 = [EX_1, EX_2, ..., EX_Y]$$

$$TL(X)_2 = [EX_{Y+1}, EX_{Y+2}, ..., EX_{N(X)}]$$

$EX_{Y,time}$ ist dabei das größte $EX_{i,time}$, für welches $EX_{i,time} <= EP_{Z,time}$ gilt. Für die Metadaten gilt dabei: TM1 = TM2 = TM. Sollte nach dem Aufspalten die Länge von TL(P)2 immer noch größer als Z sein, so wird T2 analog zu dem gerade Beschriebenen wieder in zwei Fahrtsegmente aufgespalten (und so weiter).

Bei Sensorfahrdaten wird analog vorgegangen, nur werden hier die Datenpunkte anhand einer Beschleunigung "accel_tag" anstelle einer Position "position" aufgespalten und Z = 7500.

Der Begriff "Fahrdaten" umfasst im Folgenden alle von dem Cloud-Server **160** gesendeten Daten im Stream sowie zusätzliche Informationen zu den Daten (z. B. live-Wetterdaten, soziale Normen für bestimmte Streckenabschnitte, orts- und zeitbezogene Unfallwahrscheinlichkeiten für bestimmte Streckenabschnitte, etc.) die im Backend-System **150** angespielt werden können.

Diese werden in Schritt **210** anhand verschiedener Daten-Qualitäts-Kriterien zunächst gefiltert. Ein Kriterium betrifft hierbei die Übereinstimmung von Zeitreihen von Positions-, Geschwindigkeits- und Beschleunigungsdaten. Technisch bedingt können zwei oder mehrere Zeitreihen mit Fahrdaten (z.B. Beschleunigung aus dem Sensor und GPS/Geschwindigkeits-Messungen aus dem SDK) unter Umständen nicht hinreichend synchronisiert werden. Bei einer zu großen zeitlichen Verschiebung kann die tatsächliche Bewegung des Fahrzeugs anhand der Daten in solch einem Fall nicht korrekt repräsentiert werden (z.B. negative Vorwärtsbeschleunigung bei zunehmender Geschwindigkeit) und eine Auswertung der Fahrdaten ist nicht möglich, wenn zwei oder mehrere Zeitreihen in Abhängigkeit voneinander verwendet werden sollen. Zur Messung der zeitlichen Verschiebung und zur Filterung der Fahrdaten um die Datenqualität zu gewährleisten, werden die GPS/Geschwindigkeitszeitreihen numerisch differenziert und anschließend eine Kreuzkorrelation dieser Zeitreihen und der Zeitreihen der Vorwärtsbeschleunigung berechnet. Das Maximum der Kreuzkorrelation wird als Maßzahl für die Größe der zeitlichen Verschiebung verwendet. Bei einer Überschreitung der zeitlichen Verschiebung einer bestimmten Schwelle werden die Fahrdaten für diese Fahrt vollständig herausgefiltert. Für die Berechnung der Kreuzkorrelation können Ausschnitte aus den Fahrdaten verwendet werden, die aus bestimmten Fahrsituationen wie bspw. Anfahrvorgängen stammen.

In Schritt **220** werden die gefilterten Fahrdaten sodann mit Metadaten **221** angereichert bzw. kombiniert. Aus

EP 3 716 196 A1

den so erhaltenen Daten werden dann in Schritt **230** Kennzahlen einer Fahrt berechnet und in einer Datenbank **235** abgespeichert. Kennzahlen werden separat für jede einzelne Fahrt berechnet und geben i. A. an, wie oft in der entsprechenden Fahrt ein bestimmter Datenpunkt gefunden wurde, der bestimmte Kriterien erfüllt.

Beispiele für Kennzahlen sind:

K0: Gesamtzeit für die gültige Geschwindigkeitswerte vorhanden waren.

K1: Gesamtzeit, für die gültige Beschleunigungswerte vorhanden waren.

K3,n: Gesamtzeit die sich das Fahrzeug in Geschwindigkeits-Exzessklasse n befunden hat, wobei mit dv := (Geschwindigkeit - (Tempolimit + 10 km/h)) / Tempolimit: Klasse n: n * 0.05 < dv <= (n + 1) * 0.05 für alle ganzzahligen a mit 0 <= n < 7; Klasse 7: dv > 0.35. K4,n: Gesamtzeit, in der sich das Fahrzeug in einer positiven Beschleunigungs-Exzessklasse n befunden hat, wobei für die Klasse n gilt: (2.5 + n * 0.5) m/s^2< Vorwärtsbeschleunigung <= (3.0 + n * 0.5) m/s^2; für alle ganzzahligen n mit 0 <= n < 5 ; Klasse 5: Vorwärtsbeschleunigung > 5 m/s^2;

Die Kennzahlberechnung erfolgt dabei in einer modularen Softwarearchitektur. Insbesondere ist es möglich, beliebige Module für weitere Kennzahlen hinzuzufügen, die die gesamten Daten des Trips oder Teile davon als Eingabe verwenden und daraus eine Ausgabe in Form einer (oder mehrerer) Kennzahlen erzeugen.

In einer weiteren Ausführungsform können Kennzahlen außerdem auf Basis von komplexen Fahrmanövern, wie beispielsweise Anfahrvorgängen bestimmt werden.

Die sehr große Menge an Datenpunkten wird auf diese Weise auf eine sehr viel kleinere, schneller zu verarbeitende Menge an Kennzahlen einer (Teil-) Fahrt reduziert, ohne an Relevanz für die schlussendlich zu bestimmenden Indikatoren zur Kennzeichnung eines Fahrverhaltens zu verlieren. Ein besonderer Vorteil der Bestimmung von Kennzahlen ist, dass gegenüber einer direkten Bestimmung von Indikatoren auf Basis von (Roh-) Fahrdaten zunächst effiziente Berechnungsverfahren auf die Fahrdaten angewandt werden können. Insbesondere können die Kennzahlen mittels sog. Map-Reduce-Schritte bestimmt werden, was bei einer direkten Ableitung von Indikatoren aus den Fahrdaten sehr große technische Schwierigkeiten aufwirft.

Auf Basis der gespeicherten Kennzahlen werden in Schritt **240** sodann eines oder mehrere Merkmale des Fahrverhaltens eines Fahrers bestimmt. Bei Merkmalen oder sog. Features handelt es sich um, auf im Einzelfall zu bestimmende Art, Funktionen von Kennzahlen auf Fahrerebene, d.h. für jeden Fahrer wird, aus den Kennzahlen ausgewählter Fahrten in einem bestimmten Zeitraum, ein bestimmter Feature-Vektor generiert. Ein mögliches Kriterium für die Auswahl von Fahrten, für welche Merkmale berechnet werden sollen, ist beispielsweise: Alle Fahrten des Fahrers in einem Zeitraum 2 Monate vor dem Unfall (für Unfallfahrer) gegenüber allen Fahrten in einem beliebigen 2-monatigen Zeitraum für nicht Unfallfahrer. Oder: Alle Fahrten, die zu einem Unfall geführt haben gegenüber allen anderen Fahrten. Merkmale sind dabei i. A. Kombinationen von Kennzahlen.

Beispiele für Merkmale sind etwa ein Zeitanteil, in der sich ein Fahrzeug in einer bestimmten Geschwindigkeits-Exzessklasse befunden hatte, bezogen auf einen geeigneten Vergleichszeitraum. Der Vergleichszeitraum kann beispielsweise die Gesamtzeit sein, für die gültige Geschwindigkeitswerte vorhanden waren:

$$F_1 = \frac{\sum K_{3,0}}{\sum K_0}$$

oder ein Zeitanteil, in der sich das Fahrzeug in einer bestimmten Seitenbeschleunigungs-Exzessklasse befunden hatte, bezogen auf einen geeigneten Vergleichszeitraum. Der Vergleichszeitraum kann beispielsweise die Gesamtzeit sein, für die gültige Beschleunigungswerte vorhanden waren, oder die Gesamtzeit, für die gültige Beschleunigungswerte vorhanden waren während das Fahrzeug eine Kurve durchfahren hatte:

$$F_2 = \frac{\sum K_{4,0}}{\sum K_1}$$

Im Schritt **250** werden sodann auf Basis der Merkmale und mittels einer oder mehrerer Metriken Indikatoren bestimmt.

Ein Beispiel für die Berechnungsvorschrift einer Metrik ist:

$$y_1 = \frac{1}{1 + \exp(-(\beta_0 + \beta_1 F_1 + \beta_2 F_2))}$$

Diese Metrik berücksichtigt den Zeitanteil, in der sich ein Fahrzeug in einer bestimmten Geschwindigkeits-Exzessklasse ($F_1$) befunden hatte, sowie den Zeitanteil, in der sich das Fahrzeug in einer bestimmten Seitenbeschleunigungs-Exzessklasse ($F_2$) befunden hatte. Bei geeigneter Wahl der freien Parameter $\beta_0$, $\beta_1$ und $\beta_2$ kann diese Metrik eine Unfallwahrscheinlichkeit (innerhalb eines gewissen Zeitintervalls) beschreiben. Die korrekte Parametrisierung kann anhand von Fahr- und Unfalldaten gelernt werden.

Die Zuordnung von Indikatoren zu den Merkmalen kann insbesondere auf Basis eines oder mehrerer gelernter Parameter erfolgen, die zuvor in einem Lernschritt **260** aus empirischen Unfall- bzw. Schadendaten **265** maschinell gelernt wurden. Unter Unfall- bzw. Schadendaten sind Informationen zu verstehen, die Unfälle betreffen, wie etwa ob es einen Unfall gab, ob der Fahrer diesen verschuldet hat, inwieweit der Unfall versichert war (Vollkasko, Teilkasko oder Haftpflicht), wie schwerwiegend der Unfall war, d.h. ob es Personenschäden gab, wie schwer das Fahrzeug beschädigt war, die Höhe der entstandenen Reparaturkosten, die Unfallursache, Position und Ort des Unfalls, sowie durch ein Ereignis ausgelöste hochauflösende Unfalldaten (>= 100 Hz Beschleunigungsdaten). Die Schadendaten werden vorzugsweise zunächst nach den relevanten Schäden gefiltert, so dass z. B. Schäden beim Einparkvorgang, Hagel- oder Steinschlagschäden etc. nicht berücksichtigt werden.

Hierzu haben die Erfinder zunächst in einem mehrstufigen, iterativen Prozess die zu verwendenden Merkmale bestimmt (Feature Engineering). Startpunkt dieses Prozesses ist eine Tabelle, in welcher Unfalldaten mit einem möglichst breit angelegten Merkmals-Vektor (d.h. mit einer großen Anzahl verschiedener Merkmalen / Kennzahlen) auf Fahrerebene kombiniert werden. Zu jedem Fahrer gibt es also die entsprechenden Merkmale sowie die Unfalldaten.

In einem ersten Schritt wurden die für das Unfallrisiko möglicherweise relevanten Merkmale durch geeignete, nichtlineare Klassifikationsmodelle (z. B. Random Forests) identifiziert. Daraus entsteht ein deutlich reduzierter Merkmals-Vektor. In einem zweiten Schritt wurde ein Regressionsmodell (logistische Regression) mit entsprechender Regularisierung (LASSO) zur Merkmals-Selektion verwendet. Falls notwendig, wurden diese Merkmale bereits vor diesem Schritt geeignet transformiert bzw. kombiniert. Dies muss für jedes Merkmal individuell entschieden werden. Auf diese Weise wurde eine reduzierte Auswahl an Merkmalen erhalten, welche mit dem Unfallrisiko korrelieren.

Der eigentliche Lernschritt der Bestimmung der relevanten Parameter $\beta$ besteht schließlich in der Berechnung des Unfallrisikos mittels logistischer Regression unter der Verwendung der im vorherigen Schritt getroffenen Endauswahl an Merkmalen.

Als Ergebnis dieses Lernschrittes werden die Parameter $\beta$ eines Regressionsmodells erhalten, welches es erlaubt, aus den Merkmalen Unfallwahrscheinlichkeiten für jeden Fahrer (genauer: für jede Fahrer-/Fahrzeug-Kombination) abzuleiten. Der gelernte Zusammenhang erlaubt es ferner unfallrelevante Merkmale zu identifizieren, welche nach geeigneter Aggregation dem Fahrer in Form von Ereignissen angezeigt werden können, um seine Fahrweise zu verbessern und sein Unfallrisiko zu senken.

Umgekehrt erlaubt der Zugang auch die Identifikation solcher Merkmale, welche negativ mit dem Unfallrisiko korreliert sind. Solche "positiven" Verhaltensweisen wirken sich also positiv auf den Indikator aus und können auch in entsprechenden positiven Ereignissen angezeigt werden.

Ein weiterer wesentlicher Vorteil der Verwendung der logistischen Regression besteht in der multiplikativen Bewertung von einzelnen Merkmalen zu 'aggregierten' Merkmalskomponenten, im Gegensatz zu einem additiven Modell. Deshalb ist es sehr einfach möglich, aus den einzelnen Parametern der angepassten logistischen Regression separate Indikatoren für Einzelkomponenten (Geschwindigkeit, Kurvenfahrten, Bremsen, Beschleunigen, etc.) zu ermitteln.

In einer bevorzugten Ausführungsform werden Unfälle automatisch identifiziert, die entsprechenden Kennzahlen/Merkmale der betreffenden Fahrten abgezogen, und das Modell in einem parallel zum Datenstrom der Indikatorenbestimmung laufenden Prozesses in Echtzeit neu kalibriert.

Das existierende Modell kann außerdem, mittels optimaler Steuerung, unter anderem durch zeitlich abhängige Effekte erweitert werden, (z. B. Optimierung der Parameter je nach Jahreszeiten oder Wetterlage).

Anhand der im System gesammelten Unfalldaten ist es möglich die Unfallwahrscheinlichkeiten für bestimmte Streckenabschnitte in Abhängigkeit von verschiedenen örtlichen sowie zeitlichen Faktoren (z. B. Tageszeit, Kurvenausprägung und -häufigkeit, Wetterereignisse etc.) zu bestimmen. Aus den Unfallwahrscheinlichkeiten lassen sich wiederum (u. U. zeitabhängige) Indikatoren für bestimmte Streckenabschnitte ableiten. Die Kombination von Streckenindikator mit Fahrerindikator erlaubt im Vergleich zu reinen Fahrerindikatoren eine zuverlässigere Beurteilung der Unfallwahrscheinlichkeit einer Fahrt (z. B. defensive bzw. aggressive Fahrweise auf Strecken mit hoher Unfallwahrscheinlichkeit).

In einer Ausführungsform können außerdem mehrerer Zeitreihen im Stream bei Kennzahlextraktion kombiniert werden, z. B. die Kombination von Geschwindigkeit und Beschleunigung zur Berechnung einer geschwindigkeitsabhängigen Beschleunigung.

Die Ausgabe der erhaltenen Indikatoren **281** erfolgt sodann in Schritt **280.**

In einem parallelen Prozess werden aus den Fahrdaten **201** ferner in einem Schritt **270** Ereignisse bestimmt, die in dem Ausgabeschritt **280** ebenfalls an den Fahrer ausgegeben werden.

Insbesondere erlaubt es die bestehende Modellierung gezielt die Merkmale zu berechnen, welche mit einem erhöhten Unfallrisiko korrelieren. Um dem Fahrer ein vereinfachtes und dennoch aussagekräftiges Feedback über die entsprechenden Ereignisse in seinen Einzelfahrten zu geben, werden entsprechende Ereignisse berechnet und zur Darstellung in der App bereitgestellt. Die Berechnung der Ereignisse erfolgt nach folgender Logik:

Aus der Modellierung geht zunächst hervor, welche Merkmale für das Unfallrisiko relevant sind. Über die o.g. Berechnungsvorschrift, dass sich Kennzahlen aus Einzeldatenpunkten berechnen und aus diesen Kennzahlen wiederum Merkmale berechnet werden, lassen sich auch diejenigen Einzeldatenpunkte oder Fahrmuster, z.B. Fahrmanöver, einer Fahrt identifizieren, die für das Unfallrisiko relevant sind. Die Einzeldatenpunkte oder Fahrmuster, die Messwerte der Telematik-Sensorik beinhalten, werden nun so auf Basis der Komponenten (Bremsen, Lenken, ...) zeitlich beieinanderliegend gruppiert, dass sich nachfühlbare (im KFZ während der Fahrt) Manöver / Ereignisse bilden, welche eine hohe Korrelation zum Unfallrisiko aufweisen.

Aus der Modellierung ergibt sich beispielsweise, dass überhöhte Geschwindigkeit (bis 10km/h) nur mäßig mit der Unfallhäufigkeit korreliert, während mittelschwere (10-20 km/h) und starke (> 30 km/h) Verstöße deutlich stärker korrelieren. Diese drei separaten Merkmale korrelieren also unterschiedlich stark mit Unfallhäufigkeiten, hängen aber thematisch zusammen. Sie werden daher alle zur Bestimmung von Speeding (Überschreitung von Tempolimits)-Ereignissen herangezogen, dabei aber unterschiedlich schwer gewichtet. Dazu werden zunächst Einzeldatenpunkte ermittelt, welche sich in den entsprechenden Klassen der Geschwindigkeitsüberschreitung befinden, d. h. $0 < \Delta v < 10$ km/h, $10$ km/h $< \Delta v < 20$ km/h, $\Delta v > 20$ km/h und entsprechend unterschiedlich gewichtet.

Zeitlich nah zusammenliegende Einzelverstöße werden zu einem Ereignis aggregiert. Die Schwere eines Ereignisses berechnet sich aus der Anzahl an Einzeldatenpunkten im Ereignis und ihrem entsprechenden Gewicht. So erhält man für jede Fahrt und jede Gruppe von unfallrelevanten Merkmalen eine Liste an Ereignissen sowie deren Schwere. Die Einzeldatenpunkte eines Ereignisses werden über die Zeitreihe auf die zugehörigen GPS-Koordinaten gematched, aus welchen auf geeignete Weise ein Schwerpunkt des Ereignisses berechnet wird, der anschließend zur Darstellung der Ereignisse in der App verwendet wird. Erst wenn die Schwere eines Ereignisses einen festgelegten Grenzwert überschreitet, wird es dem Fahrer angezeigt. Überschreitet die Anzahl der Ereignisse pro Fahrt einen festgelegten Grenzwert, so werden dem Fahrer nur die schwersten Ereignisse oder diejenigen Ereignisse, die auf den zur Unfallhäufigkeit höchstkorrelierten Merkmalen beruhen, angezeigt.

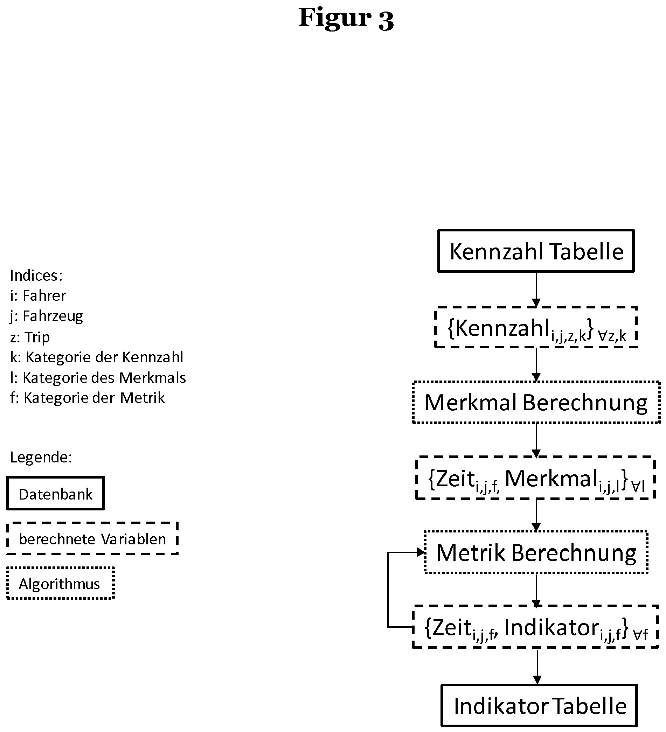

Figur 3 zeigt Details der Schritte 240 und 250 in Figur 2.

Die Berechnung der Merkmale erfolgt in mehreren Schritten. Zunächst erfolgt eine Auswahl der Fahrten, deren Merkmale für die jeweiligen Metriken relevant sind, also insbesondere derjenigen die zu einem bestimmten Zeitraum gehören. Dabei werden als ausgeblendet gekennzeichnete Fahrten ignoriert. Die derzeit definierten Metriken und die zugehörige Auswahl sind in der nachstehenden Tabelle zu sehen (diese Metriken werden jeweils auf Fahrer- und/oder Fahrzeug- und/oder Fahrerfahrzeugbasis errechnet).

| Metriken | Zeitraum Beginn | Zeitraum Ende |
| --- | --- | --- |
| aktueller Gesamtfahrwert (AGF) | Beginne des zu tarifierenden Jahres | aktueller Zeitpunkt |
| Über 30 Tage rollierend errechnete Gesamt- und Einzelfahrwerte (RGF, RDGF, RDVF, RDRF, RDSF, RDTF, RD, RZ, RDGTF) | aktueller Zeitpunkt - 30 Tage | aktueller Zeitpunkt |
| Trip Gesamtfahrwert, Distanz, Zeit (TGF, TD, TZ) | Beginn des Trips | Ende des Trips |

Im nächsten Schritt werden aus den Kennzahlen der selektierten Fahrten verschiedene Merkmale errechnet. Diese haben die Eigenschaft, dass sie grundsätzlich das für die Metrik relevante Fahrverhalten des Fahrers auf dem Fahrzeug beschreiben.

Die Merkmal Erzeugung folgt dabei einer modularen Softwarearchitektur. Insbesondere ist es möglich, beliebige Module für weitere Merkmale, hinzuzufügen, die die gesamte Menge der Kennzahlen der selektierten Fahrten oder Teile davon als Eingabe bekommen und daraus eine Ausgabe in Form eines (oder mehrerer) Merkmale erzeugen. Beispiele für komplexere Merkmale sind etwa die Entropie einer bestimmten Kennzahl über alle selektierten Trips oder der Output eines neuronalen Netzes, welche die nach einer bestimmten Logik aggregierten Kennzahlen der einzelnen Trips als Eingabe verwendet.

Ausgegeben wird eine Liste von Merkmalsausprägungen (numerische Werte). Eine ID erlaubt eine Zuordnung zu der jeweiligen Kombination aus Versicherungsnehmer und Fahrzeug, und gibt ferner an, für welchen Zeitpunkt diese gültig sind (die ID muss nicht unbedingt in einer einzigen Spalte abgelegt werden). Der Output kann optional in einer persistenten Tabelle gespeichert werden.

Die Indikatoren werden mittels der Metriken auf Fahrer-Fahrzeug Basis bestimmt. Diese werden (entweder ohne weitere Aggregation oder aggregiert auf Fahrer-Basis bzw. auf Fahrzeug-Basis) entweder dem Fahrer oder Versicherungsnehmer angezeigt oder für die Tarifierung verwendet.

Die Metriken werden aus den Merkmalen berechnet. Auch hier ist ein modularer Aufbau zur Berechnung beliebig gearteter Metriken aus den im vorangegangenen Schritt errechneten Merkmale vorgesehen. Insbesondere können Metriken auf anderen in diesem Schritt errechneten Metriken aufbauen.

Ausgegeben wird jeweils eine eindeutige ID sowie ein numerischer Wert als Indikator. Die ID erlaubt eine Zuordnung zu der jeweiligen Kombination aus Versicherungsnehmer und Fahrzeug und gibt an, um welche Metrik es sich handelt (label) und für welchen Zeitpunkt diese gültig ist (timestamp). Der Output wird in einer persistenten Tabelle gespeichert.

In einem zusätzlichen Schritt (nicht dargestellt) können die erhaltenen Indikatoren außerdem weiter aggregiert werden. entweder auf Fahrzeug (V) - oder auf Fahrerbasis (D).

Ausgegeben wird jeweils eine eindeutige ID sowie ein numerischer Wert als Aggregation von Indikatoren. Die ID erlaubt eine Zuordnung zu entweder einem Versicherungsnehmer oder einem Fahrzeug und gibt an, um welche Metrik es sich handelt (label) und für welchen Zeitpunkt diese gültig ist (timestamp). Die Ausgabe wird ebenfalls in einer persistenten Tabelle gespeichert.

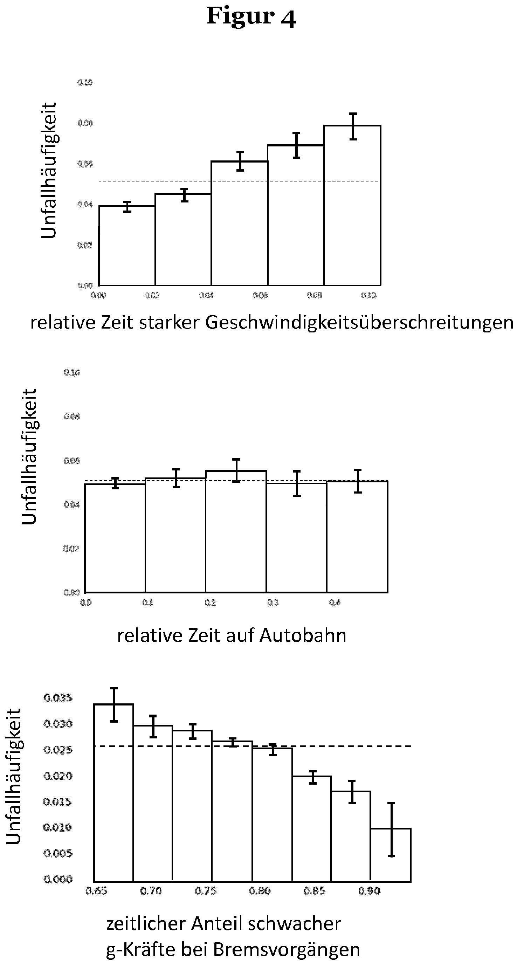

Figur 4 zeigt Zusammenhänge verschiedener Merkmale gemäß einer Ausführungsform der Erfindung mit einer empirischen Unfallhäufigkeit.

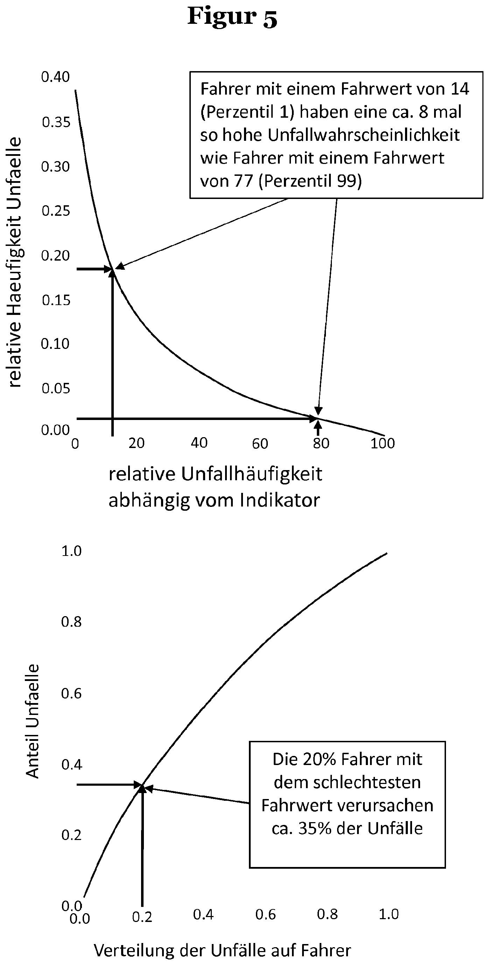

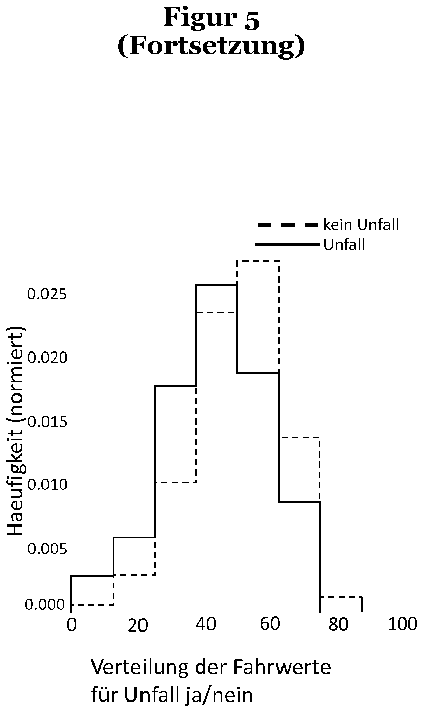

Figur 5 zeigt den Zusammenhang eines gemäß einer Ausführungsform der Erfindung bestimmten Fahrwerts mit einer Unfallhäufigkeit.

Basierend auf der individuellen Bewertung von Streckenabschnitten können ferner ähnliche Streckenabschnitte (Steigung, Kurvenradius, Tempolimit, Auffahrten, etc) per maschinellem Lernen identifiziert und bzgl. ihres Streckenprofils entsprechend bewertet werden.

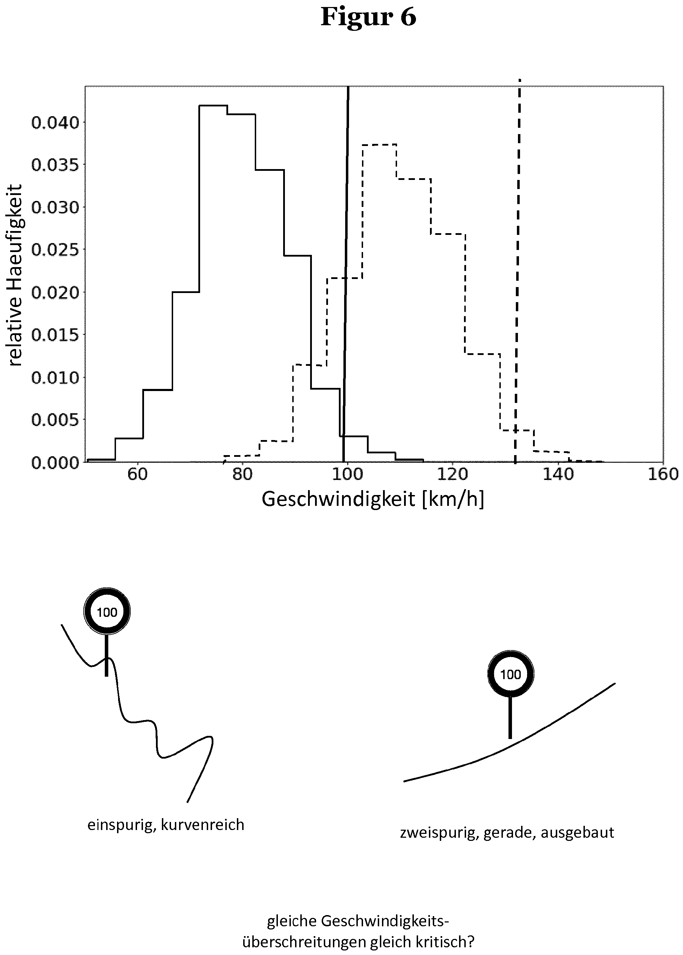

Figur 6 zeigt hierzu relative Häufigkeiten von Unfällen bei verschiedenen Geschwindigkeiten auf unterschiedlichen Strecken. Die Diagramme zeigen, dass für die Bewertung von gefährlichem Fahrverhalten nicht nur relevant ist WAS der Fahrer macht, sondern auch WO.

In einer weiteren Ausführungsform der Erfindung werden daher außerdem Profile von bestimmten Streckenabschnitten gelernt und bei der Bildung von Kennzahlen bzw. Merkmalen berücksichtigt. Beispielsweise können Informationen über soziale Normen bzgl. der gefahrenen Geschwindigkeiten, Beschleunigungen, etc. berücksichtigt werden. Soziale Normen berücksichtigen also in erster Linie wie sich andere Fahrer an entsprechenden Teilstreckenabschnitten verhalten und passen die Bewertung des Einzelfahrers entsprechend an.

Gemäß einer Ausführungsform der Erfindung werden hierfür Fahrdaten aller Fahrer (z.B. in einem täglich laufenden) Batch-Job auf Streckenabschnitte aggregiert und mit Hilfe von Klassifikationsmethoden (Random Forests) wird für jeden Streckenabschnitt ein (nach der sozialen Norm) realistisches Tempolimit gelernt. Dieses Tempolimit kann, z. B. beim Einfahren einer Ortschaft, oder beim Wechsel zwischen zwei gesetzlichen Tempolimits, vom gesetzlichen Tempolimit abweichen. Bei der Berechnung der Merkmale für Geschwindigkeitsübertretungen wird die soziale Norm, nicht das gesetzliche Tempolimit, herangezogen. Eine ähnliche Vorgehensweise ist in einer weiteren Ausführungsform auch für Bremsvorgänge (Autobahnausfahrten) oder Beschleunigungsvorgänge (Ortsausfahrten) möglich.

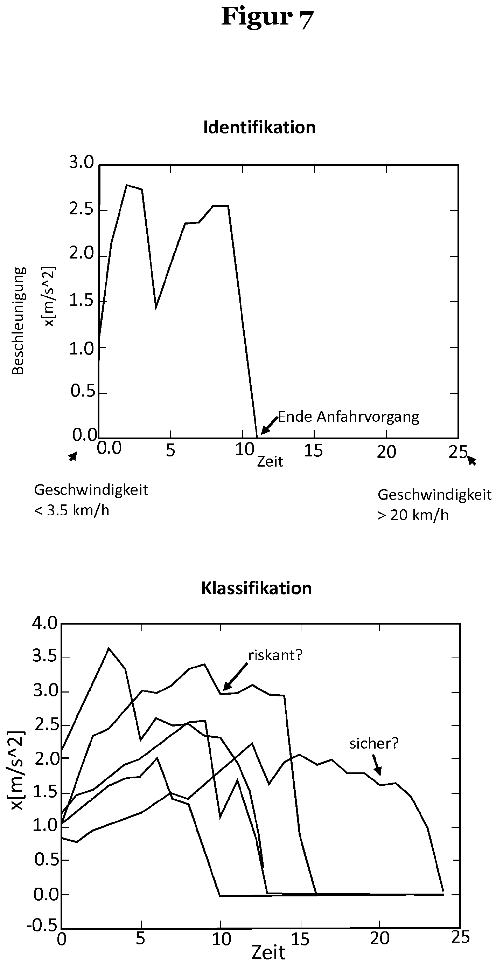

Figur 7 zeigt beispielhaft eine Identifikation und Klassifikation komplexerer Fahrmanöver, hier eines Anfahrvorgangs, im Hinblick auf einen Zusammenhang mit empirischen Unfallhäufigkeiten gemäß einer weiteren Ausführungsform der Erfindung.

Fahrmanöver sind für die Bewertung von Fahrverhalten noch relevanter als Einzeldatenpunkte, da sie die Daten in Kontext setzen. Entsprechend der bereits geschilderten Vorgehensweise bei den Fahrdaten sieht die Erfindung in einer Ausführungsform ebenfalls vor, Ausprägungen bestimmter Fahrmanöver, wie beispielsweise einen Anfahrvorgang, anhand der Fahrdaten zu identifizieren und auf deren Basis sodann eine Kennzeichnung eines Fahrverhaltens, insbesondere im Hinblick auf eine empirische Unfallhäufigkeit vorzunehmen.

Die im Stream berechneten Indikatoren (Gesamtindikator und Einzelkomponenten-Indikatoren) und Ereignisse einer Fahrt werden nach der Berechnung zusammen mit den GPS Daten (waypoints) im Backend System hinterlegt und können dort von der App abgerufen werden. Durch die schnelle Verarbeitung der Daten in der Cloud bzw. im Stream des Backends stehen die Daten bereits wenige Minuten nach Beendigung der Fahrt zur Verfügung. Öffnet der Fahrer dann seine App, so werden ihm die Fahrtstrecke, aufgetretene Ereignisse (als Markierungen auf der Karte), die Einzelkomponenten-Indikatoren sowie sein Gesamtindikator angezeigt.

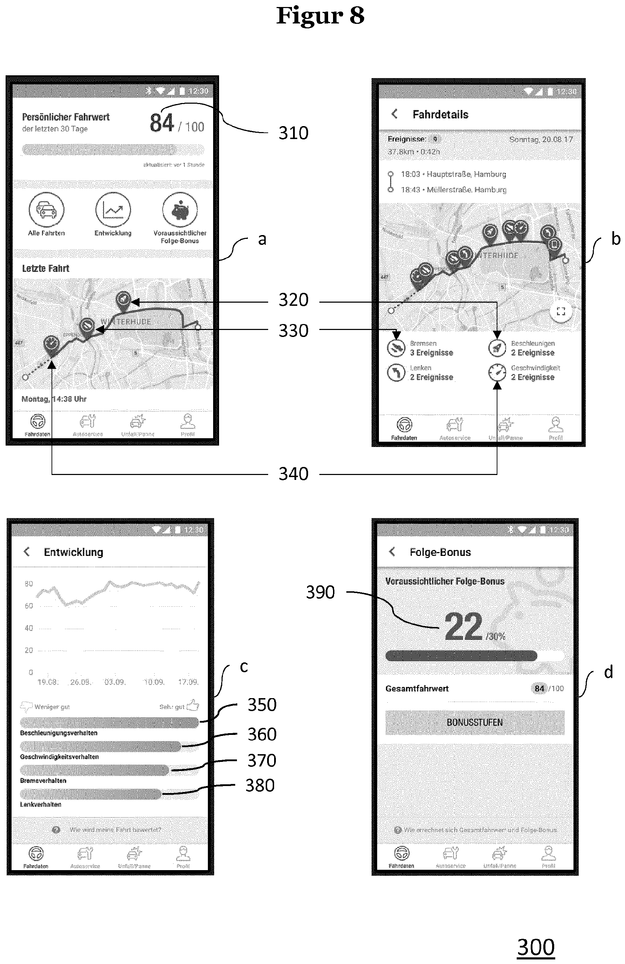

Figur 8 zeigt hierzu verschiedene Bildschirmmasken der App **125**. Auf einem Hauptbildschirm a wird ein persönlicher Fahrwert **310** angezeigt. Auf einer ebenfalls angezeigten Straßenkarte sind Fahrereignisse **320, 330** und **340** abgetragen, die jeweils für eine Unfallhäufigkeit relevante Beschleunigungs-, Brems- und Geschwindigkeitsereignisse kennzeichnen, wie aus der Bildschirmmaske b ersichtlich. Der Bildschirm c zeigt eine Entwicklung des persönlichen Fahrwerts über einen bestimmten Zeitraum an. Außerdem angezeigt werden Einzelkomponenten-Indikatoren bezüglich des Beschleunigungsverhaltens **350,** des Geschwindigkeitsverhaltens **360,** des Bremsverhaltens **370** sowie des Lenkverhaltens **380.** In dem Bildschirm d wird der Fahrer als zusätzlicher Anreiz zur Anpassung seines Fahrverhaltens darüber informiert, wie sich das bisher gemessene Fahrverhalten als Bonus **390** auf eine Versicherungsprämie auswirkt.

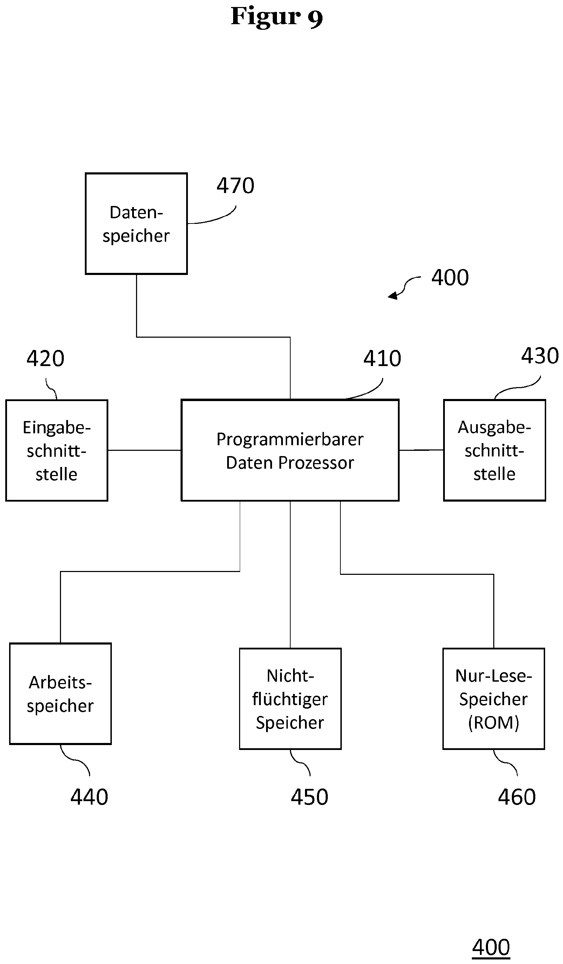

Figur 9 zeigt ein System zur Kennzeichnung von Fahrverhalten gemäß einer Ausführungsform der Erfindung. Das System **400** umfasst einen programmierbaren Datenprozessor **410,** der über eine Eingabeschnittstelle **420** sowie eine Ausgabeschnittstelle **430** verfügt. Ferner umfasst das System einen Arbeitsspeicher **440,** einen nichtflüchtigen Speicher **450** sowie einen Nur-Lese-Speicher (ROM) **460.** Außerdem ist der programmierbare Datenprozessor **410** mit einem Datenspeicher **470** gekoppelt.

Wie bereits erwähnt, können exemplarische Ausführungsformen auch Computerprogrammprodukte beinhalten. Die Computerprogrammprodukte können auf computerlesbaren Medien gespeichert werden, um computerausführbare Anweisungen oder Datenstrukturen zu tragen oder zu haben. Solche computerlesbaren Medien können alle verfügbaren Medien sein, auf die von einem Allzweck- oder Spezialcomputer zugegriffen werden kann. Als Beispiel können solche computerlesbaren Datenträger RAM, ROM, EPROM, EEPROM, CD-ROM oder andere optische Plattenspeicher, Magnetplattenspeicher oder andere magnetische Speichervorrichtungen oder jedes andere Medium beinhalten, das zum Tragen oder Speichern des gewünschten Programmcodes in Form von computerausführbaren Anweisungen oder Datenstrukturen verwendet werden kann und auf das ein Universal- oder Spezialcomputer zugreifen kann. Wenn Informationen über ein Netzwerk oder eine andere Kommunikationsverbindung (entweder fest, drahtlos oder eine Kombination aus fest oder drahtlos) an einen Computer übertragen oder bereitgestellt werden, betrachtet der Computer die Verbindung ordnungsgemäß als ein computerlesbares Medium. Eine solche Verbindung ist also ein Beispiel für ein computerlesbares Medium. Kombinationen der oben genannten sind ebenfalls in den Anwendungsbereich der computerlesbaren Medien einzubeziehen. Computerausführbare Anweisungen sind beispielsweise Anweisungen und Daten, die einen Universalcomputer, einen Spezialcomputer oder eine Spezialverarbeitungsvorrichtung veranlassen, eine bestimmte Funktion oder Funktionsgruppe auszuführen. Darüber hinaus beinhalten computerausführbare Anweisungen beispielsweise Anweisungen, die von einem Computer verarbeitet werden müssen, um die Anweisungen in ein Format umzuwandeln, das von einem Computer ausgeführt werden kann. Die computerausführbaren Anweisungen können in einem Quellformat vorliegen, das kompiliert oder interpretiert wird, um die Anweisungen im ausführbaren Format zu erhalten. Wenn die computerausführbaren Anweisungen transformiert werden, kann ein erster Computer beispielsweise die computerausführbaren Anweisungen in das ausführbare Format und ein zweiter Computer kann die transformierten Anweisungen ausführen.

Die computerausführbaren Anweisungen können modular aufgebaut sein, so dass ein Teil der Anweisungen zu einem Modul und ein weiterer Teil der Anweisungen zu einem weiteren Modul gehören kann. Die Unterschiede zwischen den verschiedenen Modulen sind jedoch möglicherweise nicht offensichtlich und die Anweisungen der verschiedenen Module können miteinander verknüpft sein.

Beispielausführungsformen wurden im allgemeinen Kontext von Verfahrensschritten beschrieben, die in einer Ausführungsform von einem Computerprogrammprodukt implementiert werden können, das computerausführbare Anweisungen, wie beispielsweise Programmcode, enthält, die von Computern in vernetzten Umgebungen ausgeführt werden. Programmodule sind in der Regel z.B. Routinen, Programme, Objekte, Komponenten oder Datenstrukturen, die bestimmte Aufgaben erfüllen oder bestimmte abstrakte Datentypen implementieren. Computerausführbare Anweisungen, zugehörige Datenstrukturen und Programmodule stellen Beispiele für Programmcode zur Ausführung von Schritten der hierin offenbarten Verfahren dar. Die besondere Reihenfolge dieser ausführbaren Anweisungen oder zugehörigen Datenstrukturen stellt Beispiele für entsprechende Handlungen zur Ausführung der in solchen Operationen beschriebenen Funktionen dar.

Einige Ausführungsformen können in einer vernetzten Umgebung unter Verwendung logischer Verbindungen zu einem oder mehreren entfernten Computern mit Prozessoren betrieben werden. Logische Verbindungen können beispielsweise ein lokales Netzwerk (LAN) und ein Wide Area Network (WAN) beinhalten. Die Beispiele werden hier exemplarisch und nicht einschränkend dargestellt.

Solche Netzwerkumgebungen sind in büro- oder unternehmensweiten Computernetzwerken, Intranets und im Internet üblich. Die Fachkräfte werden es zu schätzen wissen, dass solche Netzwerk-Computerumgebungen typischerweise viele Arten von Computersystemkonfigurationen umfassen, einschließlich PCs, tragbare Geräte, Multiprozessorsysteme, mikroprozessorbasierte oder programmierbare Unterhaltungselektronik, Netzwerk-PCs, Kleincomputer, Mainframe-Computer und dergleichen. Ausführungsformen können auch in verteilten Computerumgebungen praktiziert werden, in denen Aufgaben von lokalen und entfernten Verarbeitungsgeräten ausgeführt werden, die über ein Kommunikationsnetzwerk verbunden sind (entweder durch festverdrahtete Verbindungen, drahtlose Verbindungen oder durch eine Kombination von festverdrahteten oder drahtlosen Verbindungen). In einer verteilten Computerumgebung können sich Programmodule sowohl auf lokalen als auch auf entfernten Speichermedien befinden.

Ein Beispielsystem zur Implementierung des Gesamtsystems oder von Teilen könnte eine Universal-Computervorrichtung in Form eines herkömmlichen Computers beinhalten, die eine Verarbeitungseinheit, einen Systemspeicher und einen Systembus beinhaltet, der verschiedene Systemkomponenten einschließlich des Systemspeichers mit der Verarbeitungseinheit koppelt. Der Systemspeicher kann einen Nur-Lese-Speicher (ROM) und einen Direktzugriffsspeicher (RAM) beinhalten. Der Computer kann auch ein magnetisches Festplattenlaufwerk zum Lesen von und Schreiben auf eine magnetische Festplatte, ein Magnetplattenlaufwerk zum Lesen von oder Schreiben auf eine Wechselfestplatte und ein optisches Plattenlaufwerk zum Lesen von oder Schreiben auf eine Wechselfestplatte beinhalten.

**Patentansprüche**

1. Computer-implementiertes Verfahren zur Kennzeichnung eines Fahrverhaltens, umfassend die Schritte:

   - Erhalten von Fahrdaten einer Fahrt, wobei die Fahrdaten zumindest einem Fahrzeug zugeordnet sind;
   - Verdichten der Fahrdaten zu einer oder mehreren Kennzahlen einer Fahrt;
   - Speichern der verdichteten Fahrdaten,
   - Bestimmung zumindest eines Indikators für das Fahrverhalten eines Fahrers, basierend auf gespeicherten verdichteten Fahrdaten bzw. Kennzahlen mehrerer Fahrten eines bestimmten Zeitraums;
   - Ausgeben des zumindest einen Indikators.

2. Verfahren nach Anspruch 1, wobei die Fahrdaten als Datenstrom erhalten werden.

3. Verfahren nach Anspruch 2, wobei die Fahrdaten in dem Datenstrom in Fahrdaten mehrerer Teilfahrten derart aufgespalten sind, dass die Anzahl der Fahrdaten einer Teilfahrt kleiner oder gleich einem vorbestimmten Maximalwert ist.

4. Verfahren nach einem der vorhergehenden Ansprüche, wobei die Fahrdaten zunächst nach Qualitätskriterien (QK) gefiltert werden.

5. Verfahren nach Anspruch 4, wobei ein Qualitätskriterium (QK) eine korrekte Befestigung eines Fahrdatensensors in einem Fahrzeug betrifft.

6. Verfahren nach Anspruch 4, wobei ein Qualitätskriterium (QK) eine Übereinstimmung von Zeitreihen verschiedener Sensoren betrifft, beispielsweise Zeitreihen von Position, Geschwindigkeit und / oder Beschleunigung.

7. Verfahren nach Anspruch 4, wobei Fahrdaten aus der weiteren Berechnung ausgeblendet werden, wenn sie ein Qualitätskriterium (QK) nicht erfüllen.

8. Verfahren nach einem der vorhergehenden Ansprüche, wobei die erhaltenen Fahrdaten zusätzlich mit weiteren Daten, beispielsweise mit Wetterdaten angereichert werden.

9. Verfahren nach einem der vorhergehenden Ansprüche, wobei die Kennzahlen eine oder mehrere der folgenden Kennzahlen umfassen:

   - Gesamtzeit, für die gültige Geschwindigkeitswerte vorhanden waren ($K_0$);
   - Gesamtzeit, für die gültige Beschleunigungswerte vorhanden waren ($K_1$);
   - Gesamtzeit, die sich das Fahrzeug in einer bestimmten Geschwindigkeits-Exzessklasse (n) befunden hat ($K_{3,n}$);
   - Gesamtzeit, die sich das Fahrzeug in einer bestimmten Negativ-, Positiv- oder Lateral-Beschleunigungs-Exzessklasse (n) befunden hat ($K_{4,n}$, $K_{5,n}$, $K_{6,n}$);
   - Gesamtzeit, die sich das Fahrzeug während eines bestimmten Zeitraums in einer bestimmten Geschwindigkeits-Exzessklasse (n) befunden hat ($K_{7,1,n}$, $K_{7,2,n}$, $K_{7,3,n}$, $K_{7,4,n}$);
   - Dauer der Fahrt ($K_8$); während der Fahrt zurückgelegte Strecke ($K_9$);
   - Kombinationen der genannten Kennzahlen.

10. Verfahren nach einem der vorhergehenden Ansprüche, wobei Kennzahlen die folgende Kennzahl umfassen:

    - Summe über die Dauer von Smartphone-Nutzungsereignissen ($K_{10}$).

11. Verfahren nach einem der vorhergehenden Ansprüche, wobei das Bestimmen zumindest eines Indikators für das Fahrverhalten eines Fahrers umfasst:

    - Bestimmen eines oder mehrerer Fahrverhaltens-Merkmale, basierend auf gespeicherten verdichteten Fahrdaten eines bestimmten Zeitraums; und
- Anwenden einer Fahrverhaltensmetrik, basierend auf dem einen oder den mehreren Fahrverhaltens-Merkmalen, um den Indikator zu erhalten.

12. Verfahren nach Anspruch 11, wobei die Fahrverhaltens-Merkmale eine Entropie einer bestimmten Kennzahl über ausgewählte Fahrten umfassen.

13. Verfahren nach Anspruch 11, wobei die Merkmale die Ausgabe eines neuronalen Netzes oder einer anderen maschinell gelernten Zuordnung umfassen, welche gespeicherte verdichtete Fahrdaten als Eingabe verwendet.

14. Verfahren nach Anspruch 1, wobei die Fahrverhaltensmetriken eine oder mehrere der folgenden Metriken oder Aggregationen von einer oder mehreren der folgenden Metriken umfassen: aktueller Gesamtfahrwert (AGF); Zeitreihe des Gesamtfahrwerts (RFG); gesamt gefahrene Zeit nach Fahrer und/oder Fahrzeug (AZ); gesamt gefahrene Zeit Fahrzeug (ATZ); Zeitreihe des Detailfahrwerts Geschwindigkeit (RDGF); Zeitreihe des Detailfahrwerts Vorwärtsbeschleunigung (RDvF); Zeitreihe des Detailfahrwerts Rückwärtsbeschleunigung (RDRF); Zeitreihe des Detailfahrwerts Seiten- bzw. Lateralbeschleunigung (RDSF); Zeitreihe des Detailfahrwerts Tageszeit (RDTF); Zeitreihe des Detailfahrwerts Smartphonenutzung (RDHF); Zeitreihe des Detailfahrwerts Geschwindigkeit + Tageszeit (RDGTF); Zeitreihe der zurückgelegten Distanz (RD); Zeitreihe der gefahrenen Zeit (RZ); Zeitreihe des Gesamtfahrwerts pro Fahrt (TGF); Zeitreihe der zurückgelegten Distanz pro Fahrt (TD); Zeitreihe der gefahrenen Zeit pro Fahrt (TZ).

15. Verfahren nach Anspruch 14, wobei die Indikatoren zusätzlich entweder auf Fahrzeug- (V) oder auf Fahrerbasis (D) aggregiert werden.

16. Verfahren nach Anspruch 1, wobei zumindest ein Indikator mit einer Unfallhäufigkeit korreliert ist.

17. Verfahren nach einem der vorgehenden Ansprüche, wobei die Bestimmung des Indikators eine maschinell gelernte Zuordnung verwendet.

18. Verfahren nach einem der vorhergehenden Ansprüche, wobei die Zuordnung auf der Basis empirischer Unfall- bzw. Schadendaten maschinell gelernt wurde.

19. Verfahren nach einem der vorhergehenden Ansprüche, ferner umfassend die Schritte:

- Identifizieren zumindest eines Ereignisses, basierend auf den erhaltenen Fahrdaten;
- Zuordnen von Ortsinformationen zu dem Ereignis, zum Beispiel von einer oder mehreren GPS-Koordinaten; und
- Ausgeben der Ortsinformationen und des Ereignisses an einen Nutzer, beispielsweise zur Anzeige in einer elektronischen Straßenkarte.

20. Verfahren nach Anspruch 19, wobei das Ereignis mittels eines maschinell gelernten Klassifikators identifiziert wird.

21. Verfahren nach einem der vorhergehenden Ansprüche, ferner umfassend den Schritt:

- Maschinelles Lernen eines Streckenabschnitt-Profils für einen bestimmten Streckenabschnitt und eine bestimmte Fahrtrichtung, basierend auf den erhaltenen Fahrdaten.

22. Verfahren nach Anspruch 21, wobei das Streckenabschnittprofil mindestens eine der folgenden Eigenschaften umfasst: Geschwindigkeitsprofil, Beschleunigungsprofil, Rückwärtsbeschleunigungsprofil, Seitenbeschleunigungsprofil, Topologie, Unfallrisiko, Straßenzustand, Verkehrsfluss.

23. Verfahren nach Anspruch 20, wobei zumindest ein Indikator ferner basierend auf dem maschinell gelernten Streckenprofil bestimmt wird.

24. Verfahren nach einem der vorhergehenden Ansprüche, wobei der zumindest eine Indikator für eine eindeutige Kombination eines Fahrers und eines Fahrzeugs bestimmt wird.

25. Verfahren nach einem der vorhergehenden Ansprüche, außerdem umfassend den Schritt der Identifikation des Fahrers auf Basis der erhaltenen Fahrdaten.

26. Verfahren nach einem der vorhergehenden Ansprüche, ferner umfassend den Schritt der Erkennung von Fahrmanövern auf Basis der erhaltenen Fahrdaten.

27. Verfahren nach Anspruch 25 und 26, wobei die Identifikation des Fahrers auf Basis der erkannten Fahrmanöver beruht.

28. Verfahren nach einem der vorhergehenden Ansprüche, ferner umfassend ein Löschen einzelner oder mehrerer erhaltener Fahrdaten.

29. Server zur Kennzeichnung eines Fahrverhaltens, umfassend:

- eine Schnittstelle zum Erhalten von Fahrdaten einer Fahrt, wobei die Fahrdaten zumindest einem Fahrzeug zugeordnet sind;
- eine Einheit zum Verdichten der Fahrdaten zu einer oder mehreren Kennzahlen einer Fahrt;
- einen Speicher zum Speichern der verdichteten Fahrdaten,
- eine Einheit zur Bestimmung zumindest eines Indikators für das Fahrverhalten eines Fahrers, basierend auf gespeicherten verdichteten Fahrdaten mehrerer Fahrten eines bestimmten Zeitraums;
- eine Schnittstelle zum Ausgeben des zumindest einen Indikators,

wobei der Server eingerichtet ist, ein Verfahren nach den Ansprüchen 1 bis 28 durchzuführen.

30. Fahrerassistenzsystem, das einem Fahrer zumindest einen Indikator anzeigt, der nach einem Verfahren gemäß Ansprüchen 1 bis 28 erhalten wurde.

31. Fahrerassistenzsystem nach Anspruch 30, wobei der Indikator erst nach Beendigung der Fahrt angezeigt wird.

# Figur 1

# Figur 2

# Figur 3

Indices:
i: Fahrer
j: Fahrzeug
z: Trip
k: Kategorie der Kennzahl
l: Kategorie des Merkmals
f: Kategorie der Metrik

Legende:

| Datenbank |

| berechnete Variablen |

| Algorithmus |

Kennzahl Tabelle

$\{Kennzahl_{i,j,z,k}\}_{\forall z,k}$

Merkmal Berechnung

$\{Zeit_{i,j,f}, Merkmal_{i,j,l}\}_{\forall l}$

Metrik Berechnung

$\{Zeit_{i,j,f}, Indikator_{i,j,f}\}_{\forall f}$

Indikator Tabelle

# Figur 4

relative Zeit starker Geschwindigkeitsüberschreitungen

relative Zeit auf Autobahn

zeitlicher Anteil schwacher
g-Kräfte bei Bremsvorgängen

# Figur 5

Fahrer mit einem Fahrwert von 14 (Perzentil 1) haben eine ca. 8 mal so hohe Unfallwahrscheinlichkeit wie Fahrer mit einem Fahrwert von 77 (Perzentil 99)

relative Haeufigkeit Unfaelle

relative Unfallhäufigkeit abhängig vom Indikator

Die 20% Fahrer mit dem schlechtesten Fahrwert verursachen ca. 35% der Unfälle

Anteil Unfaelle

Verteilung der Unfälle auf Fahrer

# Figur 5
# (Fortsetzung)

# Figur 6

einspurig, kurvenreich

zweispurig, gerade, ausgebaut

gleiche Geschwindigkeitsüberschreitungen gleich kritisch?

# Figur 7

**Identifikation**

Beschleunigung
x[m/s^2]

Ende Anfahrvorgang

Zeit

Geschwindigkeit
< 3.5 km/h

Geschwindigkeit
> 20 km/h

**Klassifikation**

x[m/s^2]

riskant?

sicher?

Zeit

# Figur 8

**Persönlicher Fahrwert**
der letzten 30 Tage
**84** / 100

aktualisiert: vor 1 Stunde

Alle Fahrten    Entwicklung    Voraussichtlicher Folge-Bonus

**Letzte Fahrt**

Montag, 14:38 Uhr

Fahrdaten    Autoservice    Unfall/Panne    Profil

310

a

320
330

340

**Fahrdetails**

Ereignisse: 6    Sonntag, 20.08.17
37.8km · 0:42h

18:03 · Hauptstraße, Hamburg
18:43 · Müllerstraße, Hamburg

Bremsen
3 Ereignisse
Lenken
2 Ereignisse
Beschleunigen
2 Ereignisse
Geschwindigkeit
2 Ereignisse

Fahrdaten    Autoservice    Unfall/Panne    Profil

b

**Entwicklung**

80
60
40
20
0
19.08. 26.08. 03.09. 10.09. 17.09.

Weniger gut    Sehr gut
Beschleunigungsverhalten
Geschwindigkeitsverhalten
Bremsverhalten
Lenkverhalten

Wie wird meine Fahrt bewertet?

Fahrdaten    Autoservice    Unfall/Panne    Profil

c
350
360
370
380

**Folge-Bonus**

**Voraussichtlicher Folge-Bonus**

**22** /30%

Gesamtfahrwert    **84** /100

BONUSSTUFEN

Wie errechnet sich Gesamtfahrwert und Folge-Bonus?

Fahrdaten    Autoservice    Unfall/Panne    Profil

390

d

## 300

# Figur 9

470 — Daten-speicher

400

420 — Eingabe-schnitt-stelle

410 — Programmierbarer Daten Prozessor

430 — Ausgabe-schnitt-stelle

440 — Arbeits-speicher

450 — Nicht-flüchtiger Speicher

460 — Nur-Lese-Speicher (ROM)

400

**Europäisches Patentamt**

**European Patent Office**

**Office européen des brevets**

# EUROPÄISCHER RECHERCHENBERICHT

**Nummer der Anmeldung**

EP 19 16 6300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/132709 A1 (LIU PENG [CN] ET AL) 11. Mai 2017 (2017-05-11) <br> * Absatz [0002] - Absatz [0018] * <br> * Absatz [0033] - Absatz [0108] * <br> ----- | 1-31 | INV. <br> G06Q40/08 <br> G06Q10/10 <br> G06Q10/06 |
| X | US 2017/221150 A1 (BICHACHO MATAN [IL]) 3. August 2017 (2017-08-03) <br> * Absatz [0001] - Absatz [0023] * <br> * Absatz [0034] - Absatz [0040] * <br> * Absatz [0048] - Absatz [0096] * <br> ----- | 1-31 | |
| X | US 2008/243558 A1 (GUPTE ASH [US]) 2. Oktober 2008 (2008-10-02) <br> * Absatz [0002] - Absatz [0005] * <br> * Absatz [0010] - Absatz [0043] * <br> ----- | 1-31 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 20. Juni 2019 | Mascia, Franco |

**ANHANG ZUM EUROPÄISCHEN RECHERCHENBERICHT
ÜBER DIE EUROPÄISCHE PATENTANMELDUNG NR.**

EP 19 16 6300

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2019

| Im Recherchenbericht angeführtes Patentdokument | Datum der Veröffentlichung | Mitglied(er) der Patentfamilie | Datum der Veröffentlichung |
|---|---|---|---|
| US 2017132709 A1 | 11-05-2017 | CN 105894609 A<br>US 2017132709 A1 | 24-08-2016<br>11-05-2017 |
| US 2017221150 A1 | 03-08-2017 | US 2017221150 A1<br>WO 2016005972 A1 | 03-08-2017<br>14-01-2016 |
| US 2008243558 A1 | 02-10-2008 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3162651 A1